# EUROPEAN PATENT APPLICATION

(11) **EP 4 814 751 A1**
(43) Date of publication of application: **30.09.2026**
(21) Application number: 25166732.5
(22) Date of filing: 27.03.2025
(51) Int. Cl.: G06F 16/951

(54) **SYSTEM AND METHOD FOR INDEXING AND SEARCHING SERVERS ON CROSS-COMPANY PRODUCT DATA EXCHANGE**

(71) Applicant: Siemens Aktiengesellschaft, 80333 München (DE)
(72) Inventor: AVIDAN, Itzhak, 7019900 Tel Aviv (IL); BUDAY, Gabor, 80333 München (DE); LESHEM, Alon, 7019900 Tel Aviv (IL); LIEPERT, Constantin, 81739 München (DE); STRNAD, Oliver, 76187 Karlsruhe (DE)
(74) Representative: Siemens Patent Attorneys

(57) **Abstract**

The present disclosure provides a system for indexing and searching product data across multiple sources. The system includes a centralized indexing component (130), a crawler (212) configured to retrieve data from a plurality of servers (140), a data extraction component (213) configured to process the retrieved data, a persistent server registry (211) configured to store information about the plurality of servers (140), an index updater (214) configured to maintain a searchable index (200) based on the processed data, and a search interface configured to enable querying of the searchable index (200). The system facilitates efficient data discovery and retrieval across multiple sources, streamlining the process of accessing product information.

## Description

The present disclosure relates to systems and methods for indexing and searching product data across multiple sources, and more particularly to a system for crawling and indexing servers hosting such product data, to enable efficient discovery and retrieval of engineering data.

### BACKGROUND

In recent years, the manufacturing industry has seen a significant shift towards digitalization and interconnected systems. This trend has led to the development of concepts like Digital Twins and Digital Product Passports, which aim to provide comprehensive digital representations of physical assets and products throughout their lifecycle. These digital representations often contain critical engineering data, specifications, and operational parameters that are valuable for various stakeholders in the supply chain.

As the adoption of digital technologies in manufacturing has grown, so has the need for standardized ways to represent and exchange product data. One such standard that has gained traction, particularly in Europe, is the Asset Administration Shell (AAS). The AAS provides a structured approach to encapsulate and communicate information about assets, making it easier for different systems and organizations to share and interpret data.

However, the increasing use of digital representations and standards like AAS has introduced new challenges in data management and discovery. Organizations often store their engineering data in proprietary formats or within isolated systems, making it difficult for others in the supply chain to access and utilize this information efficiently. This fragmentation of data across multiple sources and formats can lead to inefficiencies, errors, and delays in product development and manufacturing processes.

Furthermore, the lack of a unified approach to discovering and accessing product data across different organizations and systems poses significant obstacles. Original Equipment Manufacturers (OEMs) and suppliers often struggle to locate, aggregate, and verify the necessary information about components and products. This problem is exacerbated as the number of parts and participating companies in the supply chain increases, leading to a complex web of data sources that are challenging to navigate.

Another issue that arises from the current state of product data management is the difficulty in ensuring data consistency and up-to-dateness. As product information is often dispersed across various platforms, including supplier portals, websites, and online catalogs, maintaining accurate and current data becomes a cumbersome task. This can result in decision-making based on outdated or incomplete information, potentially leading to compatibility issues, quality problems, or inefficiencies in the manufacturing process.

EP4361818 discloses a system and method for collecting and managing product information across different systems in a manufacturing environment. The invention addresses the challenge of integrating diverse data sources by implementing a centralized data collection and processing framework. In this system, data from various sources such as manufacturing execution systems, enterprise resource planning systems, and quality management systems is collected and standardized. The collected data is then processed and stored in a unified format, allowing for easier access and analysis across different departments and organizations. The system utilizes a combination of data connectors, APIs, and middleware to facilitate seamless data integration from disparate sources. It also incorporates data validation and cleansing mechanisms to ensure the accuracy and consistency of the collected information.

While EP4361818 has made significant strides in addressing the problem of collecting information across different systems, it may have limitations in terms of scalability and real-time data processing. The system may require manual configuration for new data sources and may not fully address the challenges of including data from external suppliers or partners. In some cases, the solution may focus primarily on internal data sources within a single organization, potentially limiting its effectiveness in managing data across complex supply chains involving multiple companies. Additionally, the system may not fully leverage emerging standards like the Asset Administration Shell (AAS) for representing and exchanging product data.

It has been appreciated that a system is needed that overcomes one or more of these problems. The present invention introduces a more comprehensive approach to indexing and searching product data across multiple organizations. It incorporates features such as automated server discovery, support for standardized data formats like AAS, and advanced search capabilities that can span across multiple companies in the supply chain.

### SUMMARY

This summary is provided to introduce a selection of concepts in a simplified form that are further described below in the detailed description.

In a first aspect, a system for indexing and searching product data across multiple sources is provided. The system includes a centralized indexing component, a crawler configured to retrieve data from a plurality of servers, a data extraction component configured to process the retrieved data, a persistent server registry configured to store information about the plurality of servers, an index updater configured to maintain a searchable index based on the processed data, and a search interface configured to enable querying of the searchable index.

This system enables efficient discovery and access of product data across various sources, streamlining the process of finding and retrieving relevant information for users such as OEMs and suppliers.

The data extraction component may comprise a metadata extraction module, a submodel extraction module, and a payload extraction module.

By incorporating specialized extraction modules, the system can handle diverse data formats and structures, ensuring comprehensive and accurate indexing of product information.

The servers may work as AAS servers.

The Asset Administration Shell (AAS) is a standardized digital representation of an asset in the Industry 4.0 context. It serves as a comprehensive digital twin that encapsulates all relevant information about an industrial asset throughout its lifecycle. Key aspects of the AAS include:
a Standardized structure by providing a consistent format for representing asset information,
and detailed Metadata and properties about the asset, including technical specifications, operational parameters, and maintenance information.

Each AAS has a unique identifier, enabling precise tracking and management of individual assets. It provides standardized APIs for data exchange, allowing seamless integration with various systems. It supports the entire lifecycle of an asset, from design and manufacturing to operation and maintenance.

Further, AAS incorporates security measures to protect sensitive asset information and control access.

Utilizing AAS servers allows for standardized representation of assets, facilitating interoperability and consistent data exchange across different platforms and organizations.

The search interface may be configured to provide search results and enable direct downloading of data from a source server.

This feature enhances user experience by allowing immediate access to the original data source, reducing the time and effort required to obtain complete product information.

The system may handle authentication during crawling or indexing.

Authentication can be implemented in different ways, some examples are

Credential storage: The persistent server registry may securely store authentication credentials for each registered server. When the crawler accesses a server, it can retrieve the appropriate credentials from the registry.

Authentication protocols: The crawler may support various authentication protocols such as OAuth, API keys, or basic authentication. It can dynamically select the appropriate method based on the server's requirements.

Session management: For servers requiring session-based authentication, the crawler may maintain active sessions and handle token refreshing as needed to ensure continuous access.

Proxy authentication: In some cases, the system may utilize a proxy server that handles authentication on behalf of the crawler, simplifying the process and providing an additional layer of security.

Multi-factor authentication: For servers with heightened security requirements, the system may support multi-factor authentication processes.

Encryption: All authentication-related communication between the crawler and servers may be encrypted to protect sensitive credentials.

Access level management: The system may support different levels of access for crawling, allowing servers to control which data is accessible for indexing.

Audit logging: Authentication attempts and access may be logged for security auditing and troubleshooting purposes.

By implementing robust authentication handling, the system can ensure secure and authorized access to server data during the crawling and indexing process, while maintaining the confidentiality and integrity of the information being indexed.

The system manages mainly public data, but can also store specific and restricted data and make it available for search for selected and restricted parties. It can implement an access management on top of the search service, in order to allow a crawled party to restrict visibility of search results or parts of these. This access management can either work by letting administrators of the crawling party select authorized search clients upfront, or by letting search clients request access to the indexed parts of a crawled parties data. This would ensure that restricted data is securely made accessible via the service.

In a second aspect, a method for indexing and searching product data across multiple sources is provided. The method comprises crawling a plurality of servers to retrieve data, extracting relevant information from the retrieved data, registering new servers in a persistent server registry, updating a searchable index with the extracted information, and providing a search interface for querying the searchable index.

This method establishes a systematic approach to gathering, processing, and organizing product data from multiple sources, creating a centralized and easily searchable repository of information.

Extracting relevant information may comprise extracting metadata from the retrieved data, extracting submodel-specific data from the retrieved data, and extracting payload-specific data from the retrieved data.

Metadata that is extracted from the retrieved data can be, but is not limited to, identifying attributes like specific asset identifiers, versioning information or human-readable names for these technical identifiers to support keyword-based and identifier-based search scenarios.

Submodels allow attaching aspect-specific data to AAS. There are Submodels for general nameplate information, product carbon footprint, 3D CAD models, and many more. Submodel-specific data is data coming from these submodels. This can be the manufacturer information coming from the Nameplate Submodel or the number and the file format of attached CAD files coming from the 3D Models Submodel.

Payload-specific data can be collected by the system using specialized extractors that extract data from within payload files attached to the Submodels. For 3D CAD models this special data could be a bounding-box. For attached PDF files, the content of the PDF can be used to build a full-text index used during search.

By employing multiple extraction techniques, the method ensures comprehensive coverage of various data types and structures, resulting in a more robust and informative searchable index.

As mentioned above, the servers may work as AAS servers.

Utilizing AAS servers in the method allows for standardized data representation and exchange, facilitating seamless integration of information from different sources.

The method may further comprise receiving a search query through the search interface, processing the search query using a search algorithm, and returning search results based on the processed query.

This additional step enables users to efficiently locate and retrieve relevant product information from the centralized index, streamlining decision-making processes and reducing time spent on manual data searches.

The method may further comprise enabling direct downloading of data from a source server based on the search results.

By providing direct access to source data, the method enhances user experience and ensures that users can quickly obtain the most up-to-date and complete information available.

In a third aspect, a computer program product comprising instructions is provided. When executed by a computer, the instructions cause the computer to crawl a plurality of servers to retrieve data, extract relevant information from the retrieved data, register new servers in a persistent server registry, update a searchable index with the extracted information, and provide a search interface for querying the searchable index.

This computer program product automates the process of data collection, extraction, and indexing, enabling efficient management of product information across multiple sources without manual intervention.

The instructions for extracting relevant information may cause the computer to extract metadata from the retrieved data, extract submodel-specific data from the retrieved data, and extract payload-specific data from the retrieved data.

By incorporating multiple extraction methods, the computer program product ensures comprehensive data processing, resulting in a more informative and versatile searchable index.

The computer program product may further comprise instructions which, when executed by the computer, cause the computer to receive a search query through the search interface, process the search query using a search algorithm, and return search results based on the processed query.

These additional instructions enable users to efficiently search and retrieve relevant product information, enhancing decision-making processes and reducing time spent on manual data searches.

The computer program product may further comprise instructions which, when executed by the computer, cause the computer to enable direct downloading of data from a source server based on the search results.

This feature enhances user experience by providing immediate access to original data sources, ensuring users can quickly obtain complete and up-to-date product information.

The foregoing general description of the illustrative embodiments and the following detailed description thereof are merely exemplary aspects of the teachings of this disclosure and are not restrictive.

### BRIEF DESCRIPTION OF FIGURES

Non-limiting and non-exhaustive examples are described with reference to the following figures.
FIG. 1 illustrates a block diagram of a system for indexing and searching product data across multiple sources, according to aspects of the present disclosure.
FIG. 2 illustrates a block diagram of a system for indexing and searching product data with detailed components, according to an embodiment.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

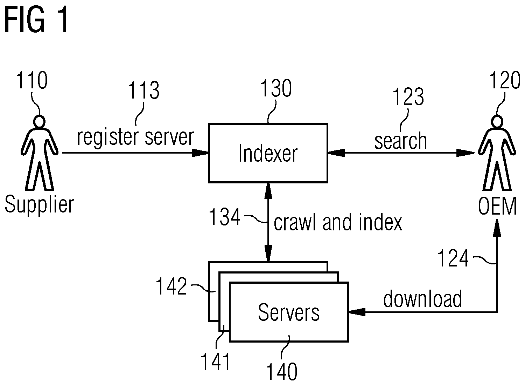

The system for indexing and searching product data across multiple sources includes several key components that work together to provide efficient data discovery and retrieval. FIG. 1 illustrates a diagram of the system, showing the main components and their interactions.

A supplier 110 can register its server information with an indexer 130. The indexer 130 serves as a centralized indexing component for the system. The indexer 130 is configured to crawl and index data from multiple servers 140, which may in one embodiment of the invention be working as Asset Administration Shell (AAS) servers.

An Original Equipment Manufacturer (OEM) 120 can interact with the indexer 130 to search for product data across the indexed servers. The system includes a search interface that enables the OEM 120 to query a searchable index maintained by the indexer 130.

The system is capable of discovering e.g, AAS based on metadata and submodel-specific payloads during the crawling and indexing process. This allows for comprehensive data extraction and indexing from the servers 140.

By centralizing the indexing and search functionality, the system enables searching across multiple data spaces. This approach allows OEMs to efficiently locate and retrieve product data from various suppliers without needing to individually query each supplier's server.

The system includes a supplier 110 that can register a server with the indexer 130, as shown in FIG. 1. The supplier 110 initiates a register server 113 process to provide information about a server 141 or a server 142 to the indexer 130. This registration process allows the supplier 110 to make product data stored on the servers 140 searchable by third party, e. g. the OEM 120.

A persistent server registry may be implemented as part of the indexer 130 to store information about the plurality of servers 140. When a supplier 110 registers a new server, the persistent server registry records details such as the server's address, authentication requirements, and data structure. This stored information enables the indexer 130 to efficiently crawl and index the registered servers 140.

The registration process may involve the supplier 110 providing necessary credentials or access tokens to the indexer 130. These credentials allow the indexer 130 to securely access and retrieve data from the registered servers 140 during the crawling and indexing operations.

By registering servers with the indexer 130, suppliers 110 can make their product data discoverable to third party like an OEM 120 without the need for direct communication or individual data sharing agreements. This centralized approach streamlines the process of making product information available across multiple sources, enhancing the efficiency of data discovery and retrieval for OEMs 120.

The indexer 130 performs a crawl and index 134 operation to collect and process data from the servers 140. This operation involves several components working together to retrieve, extract, and organize information for efficient searching.

A crawler 212 is configured to retrieve data from the plurality of servers 140. The crawler 212 systematically accesses each registered server to collect the available data. During the crawling process, the crawler 212 may handle authentication to ensure secure access to the servers 140. This authentication process may involve using credentials or access tokens provided during the server registration process.

Once the crawler 212 retrieves the data from the servers 140, a data extraction 213 component processes the collected information. The data extraction 213 component may analyze the retrieved data to identify relevant information, such as metadata, submodel-specific data, or payload-specific data.

The crawling and indexing process may be performed periodically or triggered by specific events, such as the registration of a new server or updates to existing server data. This ensures that the indexed information remains up-to-date and accurately reflects the current state of the data available on the servers 140.

By systematically crawling and indexing data from multiple servers 140, the system enables efficient searching across various data sources. This approach allows an OEM 120 to discover and access relevant product information from multiple suppliers 110 through a single, centralized interface.

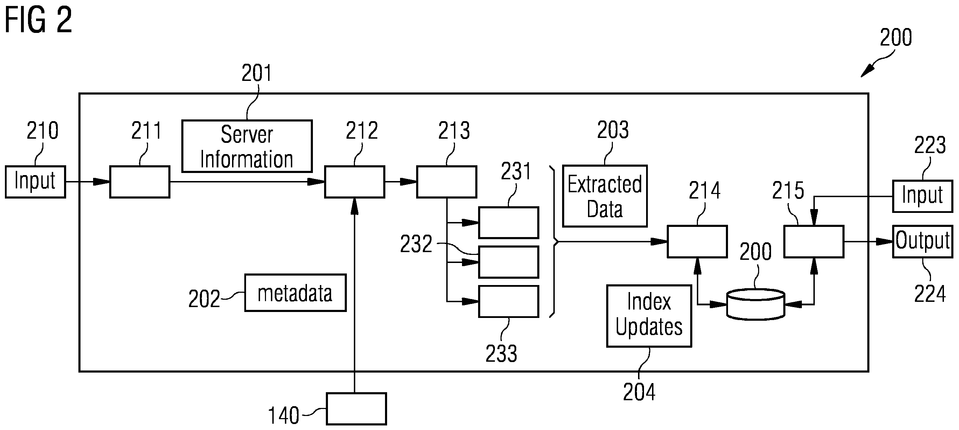

The data extraction component 213 of the system is configured to process the data retrieved by the crawler 212 from the servers 140. The data extraction component 213 may comprise subcomponents as a metadata extraction module 231, a submodel extraction module 232, and a payload extraction module 233, as illustrated in FIG. 2.

A metadata extraction module 231 is designed to extract metadata from the retrieved data. The metadata extraction module 231 may analyze and extract information such as timestamps, version numbers, or other descriptive data associated with the retrieved content. This metadata can provide valuable context and help organize the indexed information.

A submodel extraction module 232 is responsible for extracting submodel-specific data from the retrieved information. The submodel extraction module 232 may be configured to identify and extract data related to specific submodels or components within the overall data structure. This capability allows for more granular and targeted data extraction, enabling efficient searching and retrieval of specific submodel information.

A payload extraction module 233 is tasked with extracting payload-specific data from the retrieved information. The payload extraction module 233 may process and extract the actual content or payload data from the retrieved information, which can include technical specifications, product details, or other relevant data.

The data extraction component 213 may include plug-ins for specific sub-models and file formats. These plug-ins can extend the capabilities of the extraction modules, allowing the system to handle a wide range of data structures and file types encountered across different servers 140.

During the extraction process, the metadata extraction module 231 may first analyze the retrieved data to extract relevant metadata. The submodel extraction module 232 may then process the data to identify and extract submodel-specific information. Finally, the payload extraction module 233 may extract the core content or payload data from the retrieved information.

The extracted information from all three modules is then passed to the index updater 214, which uses this processed data to maintain and update the searchable index 200. The data for each AAS in the index is updated with each scheduled or on-demand crawl. Updated the data for the shell with each crawl makes the index always up-to-date and consistent. This comprehensive extraction process ensures that the searchable index 200 contains a rich set of information, including metadata, submodel-specific data, and payload-specific data, enabling efficient and effective searching across multiple data sources.

The system includes a persistent searchable index 200, as shown in FIG. 2. The persistent searchable index 200 serves as a centralized repository of processed data extracted from the servers 140.

An index updater 214 is configured to maintain the persistent searchable index 200 based on the processed data. The index updater 214 receives extracted information from the data extraction component 213 and determines whether to insert new data or update existing data in the persistent searchable index 200.

When new data is received from a newly registered server or from a server that has not been previously indexed, the index updater 214 inserts this new data into the persistent searchable index 200. For data from servers that have been previously indexed, the index updater 214 compares the newly extracted information with the existing data in the persistent searchable index 200. If changes are detected, the index updater 214 updates the corresponding entries in the persistent searchable index 200 to reflect the most current information.

The persistent searchable index 200 enables efficient searches across multiple data sources. By maintaining a centralized and up-to-date index of processed data from various servers 140, the system allows an OEM 120 to quickly locate and retrieve relevant information without the need to query each individual server directly.

The persistent searchable index 200 may be structured to facilitate fast and accurate searches. For example, the index may be organized using data structures optimized for quick lookups, such as inverted indices or B-trees. These structures allow for rapid retrieval of relevant information based on search queries submitted by users.

The system may periodically update the persistent searchable index 200 to ensure that the indexed information remains current. This update process may involve re-crawling the registered servers 140, extracting new or modified data, and updating the index accordingly. The frequency of these updates may be configurable based on the specific requirements of the system or the nature of the data being indexed.

By maintaining an up-to-date persistent searchable index 200, the system ensures that users, such as OEMs 120, have access to the most current and accurate information when performing searches across multiple data sources.

The system provides a search interface for a user 120 to interact with the indexer 130, as shown in FIG. 1. The user 120 can initiate a search 123 process through this interface to query the persistent searchable index 200.

When the user 120 submits a search query, the system processes the query using a search algorithm 215, as illustrated in FIG. 2. The search algorithm 215 is designed to efficiently query the persistent searchable index 200 and retrieve relevant results based on the search criteria provided by the user 120.

The search process begins with an input 210, which may include the search query submitted by the user 120. The input 210 is then processed by the search algorithm 215, which analyzes the query and searches the persistent searchable index 200 for matching or relevant data.

After processing the search query, the system generates output data 224. The output data 224 typically includes the search results based on the processed query. These results may contain references to relevant product data stored across multiple servers 140.

The search interface is configured to present the search results to the user 120 in a user-friendly format. The results may include metadata, summaries, or other relevant information extracted from the indexed data, allowing the OEM / user 120 to quickly assess the relevance of each result.

In addition to displaying search results, the system enables direct downloading of data from a source server. Once the OEM 120 identifies the desired information in the search results, the system facilitates a download 124 process, as shown in FIG. 1. This download 124 process allows the OEM 120 to retrieve the full data directly from the original server 141 or server 142 where the information is stored.

The direct download capability eliminates the need for the OEM 120 to separately access each supplier 110's server or navigate through individual supplier portals. Instead, the OEM 120 can efficiently locate and retrieve the required product data through a single, centralized interface provided by the indexer 130.

By combining efficient search capabilities with direct data retrieval, the system streamlines the process of discovering and accessing product information across multiple sources. This approach enhances the efficiency of data exchange between suppliers 110 and OEMs 120, facilitating smoother collaboration and decision-making in product development and supply chain management.

The system for indexing and searching product data across multiple sources comprises several interconnected components that work together to facilitate efficient data discovery and retrieval.

FIG. 2 illustrates a block diagram of the system components and the flow of data through the system.

The system includes an input 210 which serves as the entry point for data into the system. The input 210 can receive input data, which may include server registration information from suppliers or search queries from OEMs. In case of an AAS Server, for example, the data can include information like the URL of the AAS Server or further credentials.

A persistent server registry 211 is implemented to store information about the registered servers 140. When a supplier registers a server through the register server 113 process, the persistent server registry 211 records the necessary details to enable the system to access and index the server's data.

The crawler 212 is responsible for retrieving data from the servers 140. The crawler 212 uses the information stored in the persistent server registry 211 to access and collect data from each registered server.

Once the crawler 212 retrieves the data, the data extraction 213 component processes the collected information. The data extraction 213 component analyzes the retrieved data to identify and extract relevant information, such as metadata, submodel-specific data, or payload-specific data.

The extracted information is then passed to the index updater 214. The index updater 214 is responsible for maintaining a searchable index 252 based on the processed data. The index updater 214 determines whether to insert new data or update existing data in the searchable index 252.

The persistent searchable index 200 serves as a centralized repository of the indexed data. The searchable index 252 enables efficient searching across the data collected from multiple servers 140.

When a search 123 process is initiated, the search algorithm 215 processes the search query. The search algorithm 215 queries the persistent searchable index 200 to find relevant information based on the search criteria.

The system generates output data 224 based on the search results. The output data 224 may include references to relevant product data stored across multiple servers 140, e.g. including AAS server information. The system can then facilitate a download 124 process, allowing the OEM to retrieve the full data directly from the original server where the information is stored.

The system can be adapted to accommodate standards other than Asset Administration Shell (AAS). The modular design of the data extraction 213 component allows for the implementation of additional extraction modules or plugins to support different data standards or formats. This flexibility enables the system to index and search product data across various industry standards and data representation formats.

A number of implementations have been described. Nevertheless, it will be understood that various modifications may be made without departing from the spirit and scope of the disclosure. Accordingly, other implementations are within the scope of the following claims.

### List of Reference

- 110: supplier
- 113: register server
- 120: OEM
- 123: search
- 124: download
- 130: Indexer
- 134: crawl and index
- 140, 141, 142: servers
- 200: persistent searchable index
- 201: server Information
- 202: metadata
- 203: extracted data
- 204: index updates
- 210: input
- 211: persistent server registry
- 212: crawler
- 213: data extraction
- 214: index updater
- 215: search algorithm
- 223: input data
- 224: output data
- 231: metadata extraction
- 232: submodel extraction
- 233: payload extraction

## Claims

1. A system for indexing and searching product data across multiple sources, the system comprising:
a centralized indexing component (130);
a crawler (212) configured to retrieve data from a plurality of servers (140);
a data extraction component (213) configured to process the retrieved data;
a persistent server registry (211) configured to store information about the plurality of servers (140).
an index updater (214) configured to maintain a searchable index (200) based on the processed data; and
a search interface configured to enable querying of the searchable index (200).

2. The system of claim 1, wherein the data extraction component (213) comprises:
a metadata extraction module (231);
a submodel extraction module (232); and
a payload extraction module (233).

3. The system of any of claims 1 to 2, wherein the servers (14) are working as AAS servers.

4. The system of any of claims 1 to 3, wherein the search interface is configured to provide search results and enable direct downloading of data from a source server.

5. The system of any of claims 1 to 3, wherein during crawling or indexing the authentication is handled.

6. A method for indexing and searching product data across multiple sources, the method comprising:
crawling a plurality of servers (140) to retrieve data;
extracting relevant information from the retrieved data;
registering new servers in a persistent server registry (211)
updating a searchable index (200) with the extracted information; and
providing a search interface for querying the searchable index (200).

7. The method of claim 6, wherein extracting relevant information comprises:
extracting metadata from the retrieved data (231);
extracting submodel-specific data from the retrieved data (232); and
extracting payload-specific data from the retrieved data (233).

8. The method of any of claims 6 to 7, wherein the servers (14) are working as AAS servers.

9. The method of any of claims 6 to 8, further comprising:
receiving a search query through the search interface;
processing the search query using a search algorithm (215); and
returning search results based on the processed query.

10. The method of claim 9, further comprising enabling direct downloading of data from a source server based on the search results.

11. A computer program product comprising instructions which, when executed by a computer, cause the computer to:
crawl a plurality of servers (140) to retrieve data;
extract relevant information from the retrieved data;
registering new servers in a persistent server registry (211)
update a searchable index (200) with the extracted information; and
provide a search interface for querying the searchable index (200).

12. The computer program product of claim 11, wherein the instructions for extracting relevant information cause the computer to:
extract metadata from the retrieved data;
extract submodel-specific data from the retrieved data; and
extract payload-specific data from the retrieved data.

13. The computer program product of claim 11 or 12, further Servers working as AAS servers.

14. The computer program product of any of claims 11 to 13, further comprising instructions which, when executed by the computer, cause the computer to:
receive a search query through the search interface;
process the search query using a search algorithm (215); and
return search results based on the processed query.

15. The computer program product of claim 14, further comprising instructions which, when executed by the computer, cause the computer to enable direct downloading of data from a source server based on the search results.
